# EUROPEAN PATENT SPECIFICATION

(11) **EP 2 816 429 B1**
(45) Date of publication and mention of the grant of the patent: **23.11.2016**
(21) Application number: 13749452.2
(22) Date of filing: 05.02.2013
(51) Int. Cl.: G05B 19/4155, B23Q 11/00, B23Q 15/00, B23Q 41/08, G05B 19/406

(54) **Machine tool**
Werkzeugmaschine
Machine-outil

(30) Priority: 15.02.2012 JP 2012030619
(43) Date of publication of application: 24.12.2014
(73) Proprietor: Citizen Holdings Co., Ltd., Nishitokyo-shi, Tokyo 188-8511 (JP); Citizen Machinery Co., Ltd., Nagano 389-0206 (JP)
(72) Inventor: ASAHARA, Noriyuki, Kitasaku-gun Nagano 389-0206 (JP)
(74) Representative: Puschmann Borchert Bardehle Patentanwälte Partnerschaft mbB
(86) International application number: PCT/JP2013/052559
(87) International publication number: WO 2013/121925

(56) References cited:
- JP-A- S59 149 516
- JP-A- 2000 094 266
- JP-A- 2011 158 214
- JP-A- 2011 175 316
- US-A- 4 396 976

## Description

The present invention relates to a machine tool.

There is a conventional machine tool having a machining chamber for machining a material, an illuminator provided in the machining chamber, and an NC unit for controlling a machining operation on the basis of an NC program, see, for example Japanese Patent Laid-Open No.2011-175316, or US 4 396 976 A ). The conventional machine tool has a one-block stop mode. The "one-block stop mode" is a mode in which the NC program is executed for only one block thereof and then the machine tool stops its operation.

In the one-block stop mode, the operation of the NC program can be checked for one block at a time. The conventional machine tool also has manual execution means for manually executing the NC program via a pulse signal generated in response to operation of a manual operation part, such as a manual pulse handle, to operate the machine tool.

The above-described conventional machine tool, however, has a problem that when a worker operates the manual operation part to execute the NC program using the manual execution means in the one-block stop mode, a notification of completion of executing one block of the NC program is displayed on an operation panel provided outside the machining chamber. Thus, the worker may not immediately notice the completion of executing one block of the NC program while observing the interior of the machining chamber, and may unnecessarily operate the manual operation part.

It is an object of the present invention, which has been achieved for addressing the above-described problem of the conventional art, to provide a machine tool whereby a worker operating a manual operation part in the one-block stop mode can notice that one block of a machining program has been executed while observing the interior of a machining chamber.

According to a first aspect of the present invention, a machine tool includes a machining chamber for machining a material, an illuminator provided in the machining chamber, and an NC unit for controlling a machining operation on the basis of an NC program. The NC unit includes manual execution means for executing the machining operation via a signal generated in response to operation of a manual operation part, and has a one-block stop mode in which the NC program is executed for one block and then stopped. Notification means is provided for issuing a notification of completion of executing one block of the NC program while the machining operation is manually executed using the manual execution means in the one-block stop mode. The notification means includes the illuminator.

According to a second aspect of the present invention, the notification means is configured to issue a notification by changing an illumination state in the machining chamber achieved by the illuminator.

According to a third aspect of the present invention, the notification means is configured to reduce the amount of luminescence of the illuminator after one block of the NC program has been executed.

According to a fourth aspect of the present invention, the notification means is configured to blink the illuminator.

With the machine tool according to the first aspect of the present invention, a worker observing the interior of the machining chamber can easily notice a notification of completion of executing one block of the NC program issued via the illuminator. Thus, the worker operating the manual operation part in the one-block stop mode can know, without looking at an operation panel provided outside the machining chamber, that one block of the NC program has been executed while observing the action or the like of various action parts in the machining chamber, such as a spindle or a tool post, which should be checked as the worker operates the manual operation part.

Because the notification means of the machine tool in accordance with the second aspect of the present invention is configured to issue a notification by changing the illumination state in the machining chamber achieved by the illuminator, the worker can notice the change of the illumination state in the machining chamber achieved by the illuminator while observing the interior of the machining chamber through a window. Thus, the worker operating the manual operation part in the one-block stop mode can know that one block of the NC program has been executed while observing the interior of the machining chamber without looking at the operation panel provided outside the machining chamber.

Because the notification means of the machine tool according to the third aspect of the present invention is configured to reduce the amount of luminescence of the illuminator after one block of the NC program has been executed, the interior of the machining chamber becomes darker when one block of the NC program has been executed. Thus, the worker can easily know that one block of the NC program has been executed.

Because the notification means of the machine tool according to the fourth aspect of the present invention is configured to blink the illuminator, the illuminator blinks after one block of the NC program has been executed. Thus, the worker can easily know that one block of the NC program has been executed.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown
- Fig. 1: a front view schematically illustrating a machine tool as one embodiment of the present invention;
- Fig. 2: a schematic block diagram of a machine tool as one embodiment of the present invention;
- Fig. 3: a flow chart illustrating a sample operation of a machine tool as one embodiment of the present invention.

Details of a machine tool as an embodiment of the present invention do not matter as long as the machine tool includes a machining chamber for machining a material, an illuminator provided in the machining chamber, and an NC unit for controlling a machining operation on the basis of an NC program, the NC unit including manual execution means for executing the machining operation via a signal generated in response to operation of a manual operation part, and having a one-block stop mode in which the NC program is executed for one block and then stopped, wherein notification means is provided for issuing a notification of completion of executing one block of the NC program while the machining operation is manually executed using the manual execution means in the one-block stop mode, and the notification means includes the illuminator, so that a worker rotationally operating a manual pulse handle in the one-block stop mode can know that one block of the NC program has been executed while observing the inside of the machining chamber without looking at an operation panel provided outside the machining chamber.

For example, it does not matter how the illumination of the illuminator is changed as long as a worker observing the interior of the machining chamber can notice the change of the illumination in the machining chamber.

In the following embodiment, a pulse signal is used for making the manual execution unit execute machining operation. The signal used in the present invention, however, is not restricted to a pulse signal as long as the signal can make the manual execution unit execute machining operation.

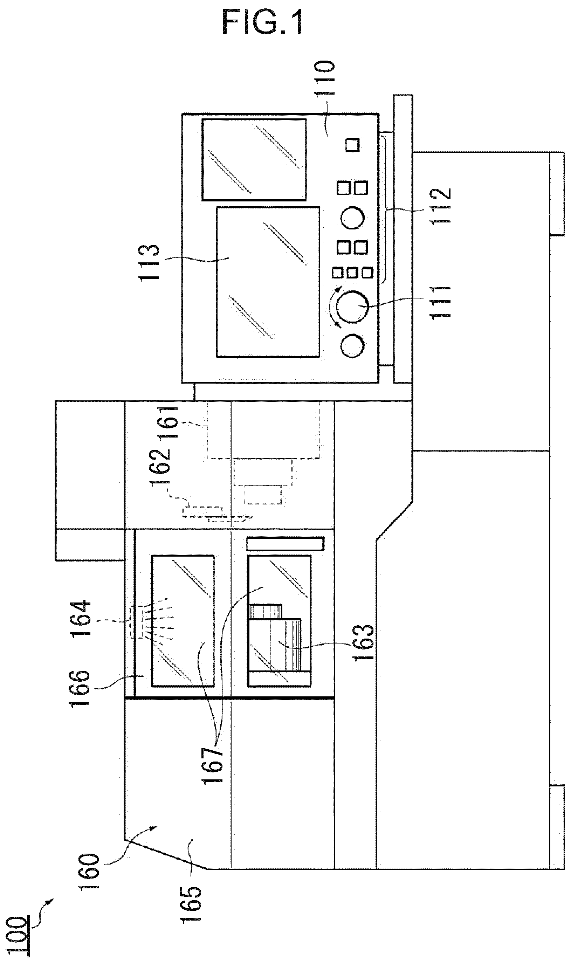

A machine tool 100 as one embodiment of the present invention will now be discribed with reference to Figs. 1 to 3.

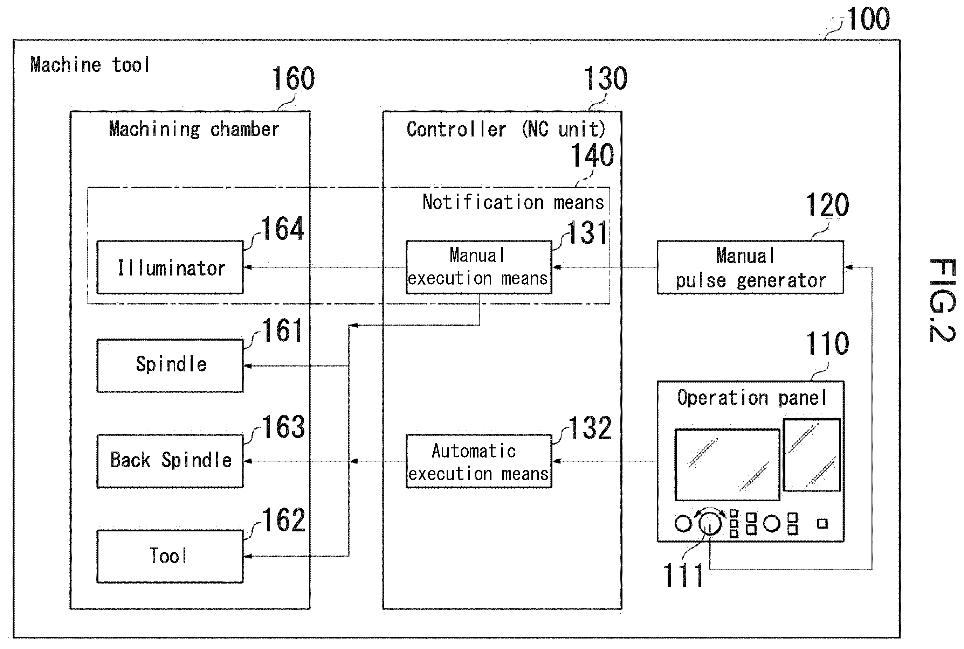

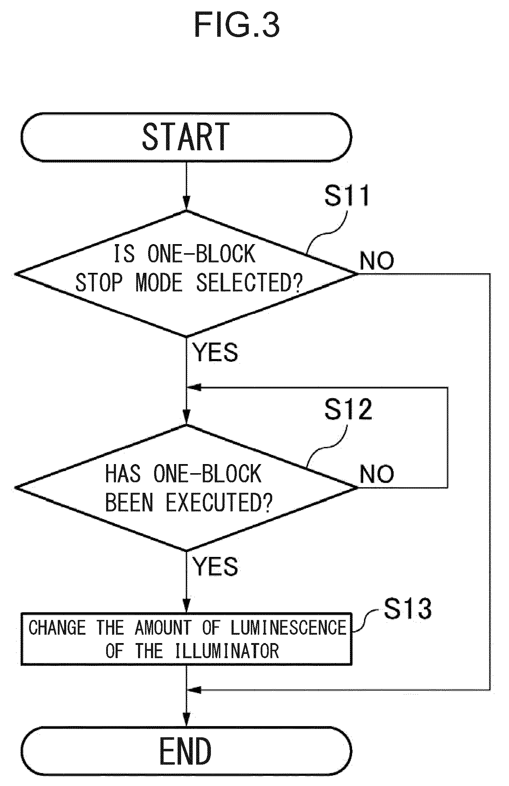

Fig. 1 is a front view schematically illustrating the machine tool 100; Fig. 2 is a schematic block diagram of the machine tool 100; and Fig. 3 is a flow chart illustrating a sample operation of the machine tool 100.

As shown in Fig. 1 to 3, the machine tool 100 includes an operation panel 110 to be operated by a worker, a controller 130 including an NC unit, and a machining chamber 160 in which a material, or workpiece, is machined in accordance with an NC program.

Provided on the operation panel 110 are a manual pulse handle 111, which is one example of a manual operation part, switch buttons 112, and a monitor 113, for example. The machining chamber 160 includes a cover 165, a door 166, and a window 167, for example, and houses a spindle 161, a tool 162, a back spindle 163, and an illuminator 164, for example, at the interior thereof.

The manual pulse handle 111 may be manually rotated by a worker for executing the NC program in accordance with a mode to manually operate the machine tool.

The switch buttons 112 are provided in a plural number and may be used for activating the machine tool 100, stopping the operation of the machine tool 100, and selecting a mode.

The monitor 113 is provided so as to be able to display current settings and the NC program.

The spindle 161 and the back spindle 163 can grab a workpiece and rotate or move the workpiece through the rotation or movement thereof.

The tool 162 can perform cutting operation or the like on the workpiece.

The rotation, movement, or the like of the spindle 161, the back spindle 163, and the tool 162 are controlled by the controller 130 on the basis of the NC program to machine the workpiece.

The illuminator 164 is provided in the machining chamber 160 so as to be able to illuminate the workpiece, the tool 162, the spindle 161, and the back spindle 163, for example.

The cover 165 is provided for covering the machining chamber 160.

The door 166 is provided on the cover 165 so as to be able to be opened or closed as needed.

The window 167 is provided on the door 166 at a position where the windows 167 enables a worker to see the workpiece, the tools 162, the spindle 161, and the back spindle 163, for example, provided in the machining chamber 160 as the worker operates the operation panel 110.

As shown in Fig. 2, the controller 130 is equipped with a CPU and a RAM (not shown) and includes manual execution means 131 for manually executing the NC program via operation of the manual pulse handle 111, and automatic execution means 132 for automatically executing the NC program. The controller 130 has a manual execution mode achieved by the manual execution means 131 and an automatic execution mode achieved by the automatic execution means 132. The manual execution mode and the automatic execution mode can be selected and switched on the operation panel 110.

The manual pulse handle 111 is connected to the controller 130 via a manual pulse generator 120. The manual pulse generator 120 generates a pulse signal in accordance with rotational operation of the manual pulse handle 111.

A pulse signal generated in the manual pulse generator 120 is output to the manual execution means 131.

The controller 130 is configured such that, when the manual execution mode is selected, the manual execution means 131 executes the NC program in accordance with a pulse signal input from the manual pulse generator 120 to machine a material in the machining chamber 160.

The controller 130 is also configured such that, when the automatic execution mode is selected, the automatic execution means 132 automatically and sequentially executes the NC program to automatically machine a material in the machining chamber 160.

The controller 130 also has a one-block stop mode in which the NC program is executed for one block and then stopped, and a normal mode in which all blocks of the NC program are sequentially executed. The one-block stop mode and the normal mode can be selected and switched on the operation panel 110.

The controller 130 is configured so as to be able to detect completion of executing one block of the NC program.

In the one-block stop mode, a machining operation automatically stops when one block of the NC program has been executed, and execution of another block of the NC program can be started by operating the switch buttons 112 on the operation panel 110. By selecting the one-block stop mode of the controller 130, a worker can debug the NC program one block at a time and check the operating condition of the spindle 161, the back spindle 163, and the tool 162, for example.

The machine tool 100 of the present embodiment further includes notification means 140 for issuing a notification of the completion of executing one block of the NC program in the one-block stop mode.

The notification means 140 includes the controller 130 and the illuminator 164.

The notification means 140 is configured such that the controller 130 changes the amount of luminescence of the illuminator 164 in the machining chamber 160 after detecting the completion of executing one block of the NC program.

This enables a worker observing the interior of the machining chamber 160 through the window 167 to notice the change of the illumination in the machining chamber 164 achieved by the illuminator 164 to know that one block of the NC program has been executed.

The operation of the notification means 140 will now be described in detail.

As shown in Fig. 3, in step S11, the controller 130 determines whether the one-block stop mode is currently selected.

If the one-block stop mode is currently selected, the operation proceeds to step S12; otherwise the operation is finished.

In step S12, the controller 130 determines whether one block of the NC program has been executed.

If completion of executing one block of the NC program is detected, the operation proceeds to step S13; otherwise step S12 is repeated until completion of executing one block of the NC program is detected.

In step S13, the controller 130 changes the amount of luminescence of the illuminator 164 by blinking the illuminator 164, for example.

The one-block stop mode can be selected in both the manual execution mode and the automatic execution mode. Particularly, when the one-block stop mode is selected in the manual execution mode, a worker is observing the interior of the machining chamber 160 through the windows 167 for checking the position of the spindle 161 and the tool 162, for example, as the worker operates the manual pulse handle 111.

Thus, the worker observing the interior of the machining chamber 160 through the windows 167 can notice the change of the illumination in the machine chamber 160 achieved by the illuminator 164 provided in the machining chamber 160 to easily know that one block of the NC program has been executed.

The change of the amount of luminescence of the illuminator 164 is achieved, for example, by reducing the amount of luminescence of the illuminator 164 after one block of the NC program has been executed.

In this way, because the interior of the machining chamber 160 becomes darker when execution of one block of the NC program has completed, the worker can easily notice the change of the illumination in the machining chamber 160.

The change of the amount of luminescence of the illuminator 164 may also be achieved by blinking the illuminator 164.

In this way, because the illuminator 164 becomes blinking when one block of the NC program has been executed, the worker can easily notice the change of the illumination in the machining chamber 160.

After knowing that one block of the NC program has been executed, the worker can operates the switch buttons 112 on the operation panel 110 to revert the amount of luminescence of the illuminator 164 to a state of pre-completing the execution of one block of the NC program.

When checking the operation of next one block of the NC program, the worker operates the switch buttons 112 as well as the manual pulse handle 111 on the operation panel 110 to start executing the next one block of the NC program.

In other words, the worker repeats steps S11 to S13.

As described above, the machine tool 100 as one embodiment of the present invention includes the machining chamber 160 for machining a material, the illuminator 164 provided in the machining chamber 160, and the controller 130, which is an NC unit for controlling a machining operation on the basis of an NC program. The controller 130 includes the manual execution means 131 for executing the machining operation via a pulse signal generated in response to operation of the manual pulse handle 111, which is one example of a manual operation part, and has the one-block stop mode in which the NC program is executed for one block and then stopped. The notification means 140 is provided for issuing a notification of a completion of executing one block of the NC program while the machining operation is manually executed using the manual execution means 131 in the one-block stop mode. The notification means 140 includes the illuminator 164.

Because the notification means 140 is configured to issue a notification by changing the illumination state in the machining chamber 160 achieved by the illuminator 164, a worker operating the manual pulse handle 111 in the one-block stop mode can know, without looking at the operation panel 110 provided outside the machining chamber 160, that one block of the NC program has been executed while observing the action or the like of various action parts in the machining chamber 160, such as the tool 162, a tool post holding the tool 162, the spindle 161, and the back spindle 163, or the state of the workpiece, for example, which should be checked as the worker operates the manual pulse handle 111.

Also, because the notification means 140 is configured to reduce the amount of luminescence of the illuminator 164 after one block of the NC program has been executed, the worker can easily know that one block of the NC program has been executed.

Or, because the notification means 140 is configured to blink the illuminator 164, the worker can easily know that the execution of one block of the NC program has completed.

### List of reference signs

- 100: Machine tool
- 110: Operation panel
- 111: Manual pulse handle
- 112: Switch buttons
- 113: Monitor
- 120: Manual pulse generator
- 130: Controller (NC unit)
- 131: Manual execution means
- 132: Automatic execution means
- 140: Notification means
- 160: Machining chamber
- 161: Spindle
- 162: Tool
- 163: Back spindle
- 164: Illuminator
- 165: Cover
- 166: Door
- 167: Window

## Claims

1. A machine tool (100) comprising a machining chamber (160) for machining a material, an illuminator (164) provided in the machining chamber (160), and an NC unit (130) for controlling a machining operation on the basis of an NC program,
the NC unit (130) including manual execution means for executing the machining operation via a signal generated in response to operation of a manual operation part, and having a one-block stop mode in which the NC program is executed for one block and then stopped, **characterized in that**
notification means (140) is provided for issuing a notification of completion of executing one block of the NC program while the machining operation is manually executed using the manual execution means (131) in the one-block stop mode, and
the notification means comprises the illuminator (164).

2. The machine tool according to claim 1, **characterized in that** the notification means (140) is configured to issue a notification by changing an illumination state in the machining chamber (160) achieved by the illuminator (164).

3. The machine tool according to claim 2, **characterized in that** the notification means(140) is configured to reduce the amount of luminescence of the illuminator (164) after one block of the NC program has been executed.

4. The machine tool according to claim 2, **characterized in that** the notification means (140) is configured to blink the illuminator (164).

## Patentansprüche

1. Werkzeugmaschine (100) umfassend einen Bearbeitungsraum (160) zur Bearbeitung eines Materials, eine in dem Bearbeitungsraum (160) vorgesehene Beleuchtung (164) sowie eine NC-Einheit (130) zum Steuern eines Bearbeitungsvorgangs auf Grundlage eines NC-Programms,
wobei die NC-Einheit (130) mit einer manuellen Ausführungseinrichtung zur Ausführung des Bearbeitungsvorgangs über ein als Reaktion auf den Betrieb eines manuellen Betriebsteils erzeugtes Signal versehen ist und einen Block-Stopp-Modus umfasst, in dem das NC-Programm einen Block lang ausgeführt und dann angehalten wird, **dadurch gekennzeichnet, dass** eine Benachrichtigungsvorrichtung (140) zur Ausgabe einer Benachrichtigung über den Abschluss der Ausführung eines Blocks des NC-Programms vorgesehen ist, während der Bearbeitungsvorgang unter Verwendung der manuellen Ausführungsvorrichtung (131) im Block-Stopp-Modus manuell durchgeführt wird, und die Benachrichtigungsvorrichtung die Beleuchtung (164) umfasst.

2. Werkzeugmaschine nach Anspruch 1, **dadurch gekennzeichnet, dass** die Benachrichtigungsvorrichtung (140) derart konfiguriert ist, dass sie eine Benachrichtigung ausgibt, indem sie einen von der Beleuchtung (164) erzielten Beleuchtungszustand im Bearbeitungsraum (160) verändert.

3. Werkzeugmaschine nach Anspruch 2, **dadurch gekennzeichnet, dass** die Benachrichtigungsvorrichtung (140) derart konfiguriert ist, dass sie nach der Ausführung eines Blocks des NC-Programms den Helligkeitsgrad der Beleuchtung (164) reduziert.

4. Werkzeugmaschine nach Anspruch 2, **dadurch gekennzeichnet, dass** die Benachrichtigungsvorrichtung (140) derart konfiguriert ist, dass sie die Beleuchtung (164) in einen Blinkmodus schaltet.

## Revendications

1. Une machine-outil (100) comprenant une chambre d'usinage (160) pour l'usinage d'un matériau, un dispositif d'éclairage (164) disposé dans la chambre d'usinage (160), et une unité à commande numérique (130) pour commander une opération d'usinage sur la base d'un programme à CN,
l'unité à CN (130) comprenant des moyens d'exécution manuelle pour exécuter l'opération d'usinage à l'aide d'un signal généré en réponse à l'actionnement d'un élément d'actionnement manuel, et ayant un mode d'arrêt d'un bloc dans lequel le programme à CN est exécuté pour un bloc puis arrêté,
**caractérisée en ce qu'**
un moyen de notification (140) est fourni pour émettre une notification d'achèvement de l'exécution d'un bloc du programme à CN pendant que l'opération d'usinage est exécutée manuellement à l'aide de moyens d'exécution manuelle (131) dans le mode d'arrêt d'un bloc, et
le moyen de notification comprend le dispositif d'éclairage (164).

2. La machine-outil selon la revendication 1, **caractérisée en ce que** le moyen de notification (140) est configuré pour émettre une notification en changeant l'état d'éclairage dans la chambre d'usinage (160) à l'aide du dispositif d'éclairage (164).

3. La machine-outil selon la revendication 2, **caractérisée en ce que** le moyen de notification (140) est configuré pour réduire la quantité de luminescence du dispositif d'éclairage (164) après l'exécution d'un bloc du programme à CN.

4. La machine-outil selon la revendication 2, **caractérisée en ce que** le moyen de notification (140) est configuré pour faire clignoter le dispositif d'éclairage (164).
